# EUROPEAN PATENT APPLICATION

(11) **EP 4 621 918 A1**
(43) Date of publication of application: **24.09.2025**
(21) Application number: 23891544.1
(22) Date of filing: 13.11.2023
(51) Int. Cl.: H01M 10/0585, H01M 4/139, H01M 4/62, H01M 10/052, H01M 10/0566

(54) **METHOD FOR MANUFACTURING BATTERY**

(30) Priority: 16.11.2022 JP 2022183461
(71) Applicant: FUJIFILM Corporation, Tokyo 106-8620 (JP)
(72) Inventor: IWASE, Eijiro, Minamiashigara-shi, Kanagawa 250-0193 (JP); FUCHIGAMI, Yujiro, Minamiashigara-shi, Kanagawa 250-0193 (JP); KODAMA, Taiga, Minamiashigara-shi, Kanagawa 250-0193 (JP); ICHIKAWA, Kenji, Minamiashigara-shi, Kanagawa 250-0193 (JP)
(74) Representative: Meissner Bolte Partnerschaft mbB
(86) International application number: PCT/JP2023/040816
(87) International publication number: WO 2024/106397

(57) **Abstract**

Provided is a manufacturing method of a battery including a collector foil, an electrode layer, a separator, an electrode layer, and a collector foil in this order, the manufacturing method including a step A of forming the electrode layer on the collector foil using an electrode material, a step B of forming the electrode layer on the separator using an electrode material, and a step C of placing the collector foil on the electrode layer, in which both electrode materials contain an electrode active material, a conductive auxiliary agent, and an electrolytic solution, and have a concentration of solid components of 30% by volume to 80% by volume.

## Description

### BACKGROUND OF THE INVENTION

### 1. Field of the Invention

The present disclosure relates to a manufacturing method of a battery.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

For example, JP2021-530829A discloses a manufacturing method of a battery, including continuously distributing a semi-solid electrode slurry on a collector, separating the semi-solid electrode slurry into separate portions, cutting the collector to form a completed electrode, and further forming a completed electrochemical cell by bringing the completed electrode into contact with a second completed electrode interposed by a separator. In addition, Fig. 7 of JP2021-530829A shows a method of continuously bonding a positive electrode and a negative electrode, which are the completed electrode, to each other with the separator interposed therebetween, by tilting the positive electrode and the negative electrode by 90 degrees.

### SUMMARY OF THE INVENTION

In the method disclosed in JP2021-530829A, since a battery can be continuously manufactured, productivity is excellent.

On the other hand, in a case of obtaining a large-area (large-sized) battery, a weight of electrode layers of the positive electrode and the negative electrode also increases. In the case of the semi-solid state battery, since the electrode layers of both the positive electrode and the negative electrode contain a large amount of powder as a solid component, in a case where the electrode layers of the positive electrode and the negative electrode are tilted by 90 degrees (perpendicular) and continuously bonded through the separator as in the method disclosed in JP2021-530829A, the electrode layers may collapse.

Therefore, the present disclosure has been made in view of the above-described circumstances.

An object of one embodiment of the present disclosure is to provide a manufacturing method of a battery, including a step of forming an electrode layer using an electrode material which contains an electrode active material, a conductive auxiliary agent, and an electrolytic solution, in which a large-area battery can be manufactured without causing the electrode layer to collapse.

Here, the "large-area battery" refers to a battery in which an area of the electrode layer is 50,000 cm² (for example, 100 mm × 500 mm) or more.

The present disclosure includes the following aspects.
<1> A manufacturing method of a battery including a first collector foil, a first electrode layer, a separator, a second electrode layer, and a second collector foil in this order, the manufacturing method comprising:
   a step A of forming the first electrode layer on the first collector foil using a first electrode material;
   a step B of forming the second electrode layer on the separator using a second electrode material; and
   a step C of placing the second collector foil on the second electrode layer,
   in which both of the first electrode material and the second electrode material contain an electrode active material, a conductive auxiliary agent, and an electrolytic solution, and have a concentration of solid components of 30% by volume to 80% by volume.
<2> The manufacturing method of a battery according to <1>,
   in which the step A is a step of forming a positive electrode layer as the first electrode layer on a positive electrode collector foil as the first collector foil,
   the step B is a step of forming a negative electrode layer as the second electrode layer on the separator which has been placed on the positive electrode layer, and
   the step C is a step of placing a negative electrode collector foil as the second collector foil on the negative electrode layer.
<3> The manufacturing method of a battery according to <1>,
   in which the step A is a step of forming a negative electrode layer as the first electrode layer on a negative electrode collector foil as the first collector foil,
   the step B is a step of forming a positive electrode layer as the second electrode layer on the separator which has been placed on the negative electrode layer, and
   the step C is a step of placing a positive electrode collector foil as the second collector foil on the positive electrode layer.
<4> The manufacturing method of a battery according to <1>,
   in which the step A is a step of forming a positive electrode layer as the first electrode layer on a positive electrode collector foil as the first collector foil,
   the step B is a step of forming a negative electrode layer as the second electrode layer on the separator,
   the step C is a step of placing a negative electrode collector foil as the second collector foil on the negative electrode layer, and
   the manufacturing method further includes a step D1 of placing the separator on the positive electrode layer together with the negative electrode layer formed on the separator.
<5> The manufacturing method of a battery according to <1>,
   in which the step A is a step of forming a negative electrode layer as the first electrode layer on a negative electrode collector foil as the first collector foil,
   the step B is a step of forming a positive electrode layer as the second electrode layer on the separator,
   the step C is a step of placing a positive electrode collector foil as the second collector foil on the positive electrode layer, and
   the manufacturing method further includes a step D2 of placing the separator on the negative electrode layer together with the positive electrode layer formed on the separator.
<6> The manufacturing method of a battery according to any one of <1> to <5>,
   in which the step A is a step of intermittently or continuously supplying the first electrode material onto the first collector foil and regulating a thickness of the supplied first electrode material to form the first electrode layer, and
   in a case where a mass of the first electrode material supplied onto the first collector foil is denoted by G_{D1} [g] and a mass of the formed first electrode layer is denoted by G_{L1} [g], G_{L1} ≤ G_{D1} ≤ G_{L1} × 1.2 is satisfied.
<7> The manufacturing method of a battery according to any one of <1> to <6>,
   in which the step B is a step of intermittently or continuously supplying the second electrode material onto the separator and regulating a thickness of the supplied second electrode material to form the second electrode layer, and
   in a case where a mass of the second electrode material supplied onto the separator is denoted by G_{D2} [g] and a mass of the formed second electrode layer is denoted by G_{L2} [g], G_{L2} ≤ G_{D2} ≤ G_{L2} × 1.2 is satisfied.

According to one embodiment of the present disclosure, it is possible to provide a manufacturing method of a battery, including a step of forming an electrode layer using an electrode material which contains an electrode active material, a conductive auxiliary agent, and an electrolytic solution, in which a large-area battery can be manufactured without causing the electrode layer to collapse.

### BRIEF DESCRIPTION OF THE DRAWINGS

Figs. 1A to 1E are schematic process diagrams showing an example of a manufacturing method of a battery according to the present disclosure.
Fig. 2 is a schematic view showing an example of a method of forming an electrode layer.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

### <Manufacturing method of battery>

The manufacturing method of a battery according to the present disclosure is a manufacturing method of a battery including a first collector foil, a first electrode layer, a separator, a second electrode layer, and a second collector foil in this order, the manufacturing method including a step A of forming the first electrode layer on the first collector foil using a first electrode material, a step B of forming the second electrode layer on the separator using a second electrode material, and a step C of placing the second collector foil on the second electrode layer. Here, both of the first electrode material and the second electrode material contain an electrode active material, a conductive auxiliary agent, and an electrolytic solution, and have a concentration of solid components of 30% by volume to 80% by volume.

Preferred aspects of the manufacturing method of a battery according to the present disclosure include the following aspect 1-1 and the following aspect 1-2.

The aspect 1-1 is an aspect in which the step A is a step of forming a positive electrode layer as the first electrode layer on a positive electrode collector foil as the first collector foil, the step B is a step of forming a negative electrode layer as the second electrode layer on the separator which has been placed on the positive electrode layer, and the step C is a step of placing a negative electrode collector foil as the second collector foil on the negative electrode layer.

The aspect 1-2 is an aspect in which the step A is a step of forming a negative electrode layer as the first electrode layer on a negative electrode collector foil as the first collector foil, the step B is a step of forming a positive electrode layer as the second electrode layer on the separator which has been placed on the negative electrode layer, and the step C is a step of placing a positive electrode collector foil as the second collector foil on the positive electrode layer.

In addition, preferred aspects of the manufacturing method of a battery according to the present disclosure include the following aspect 2-1 and the following aspect 2-2.

The aspect 2-1 is an aspect in which the step A is a step of forming a positive electrode layer as the first electrode layer on a positive electrode collector foil as the first collector foil, the step B is a step of forming a negative electrode layer as the second electrode layer on the separator, the step C is a step of placing a negative electrode collector foil as the second collector foil on the negative electrode layer, and the manufacturing method further includes a step D1 of placing the separator on the positive electrode layer together with the negative electrode layer formed on the separator.

The aspect 2-2 is an aspect in which the step A is a step of forming a negative electrode layer as the first electrode layer on a negative electrode collector foil as the first collector foil, the step B is a step of forming a positive electrode layer as the second electrode layer on the separator, the step C is a step of placing a positive electrode collector foil as the second collector foil on the positive electrode layer, and the manufacturing method further includes a step D2 of placing the separator on the negative electrode layer together with the positive electrode layer formed on the separator.

It is preferable that both of the first electrode layer formed in the above-described step A and the second electrode layer formed in the above-described step B contain an electrode active material, a conductive auxiliary agent, and an electrolytic solution, have a thickness of 50 µm to 500 µm, and have a concentration of solid components of 30% by volume to 80% by volume. That is, in the manufacturing method of a battery according to the present disclosure, it is preferable that the first electrode layer having a thickness of 50 µm to 500 µm and a concentration of solid components of 30% by volume to 80% by volume is formed in the step A, and the second electrode layer having a thickness of 50 µm to 500 µm and a concentration of solid components of 30% by volume to 80% by volume is formed in the step B.

In the present specification, unless otherwise specified, the term "collector foil" simply refers to both the first collector foil and the second collector foil. Similarly, unless otherwise specified, the term "electrode layer" simply refers to both the first electrode layer and the second electrode layer. Similarly, the term "electrode material" simply refers to both the first electrode material and the second electrode material. In addition, the "first electrode material and the second electrode material, which contain an electrode active material, a conductive auxiliary agent, and an electrolytic solution, and have a concentration of solid components of 30% by volume to 80% by volume" is also collectively referred to as "electrode material".

Here, the thickness of the electrode layer is an arithmetic average value of thicknesses at three points measured by cross-sectional observation. In the cross-sectional observation, a known microscope (for example, a scanning electron microscope) can be used.

In addition, the concentration of solid components in the electrode layer is calculated from a compositional ratio of each component contained in the electrode layer and a specific gravity of the components.

As described above, in a case of obtaining a large-area (large-sized) battery, masses of the positive electrode and the negative electrode also increase. Therefore, in a case where the electrode layers of the positive electrode and the negative electrode are tilted by 90 degrees (perpendicular) and continuously bonded through the separator as in the method disclosed in JP2019-195052A, the electrode layer may collapse.

The present inventors have found a method including a step A of forming an electrode layer on a collector foil using an electrode material, a step B of forming an electrode layer on a separator using an electrode material, and a step C of placing the collector foil on the electrode layer. According to the method, it is possible to manufacture a battery having a layer configuration in which a positive electrode collector foil, a positive electrode layer, a separator, a negative electrode layer, and a negative electrode collector foil are provided in this order, without tilting any of the positive electrode layer and the negative electrode layer. As a result, it is possible to manufacture a large-area (large-sized) battery without collapsing the positive electrode layer and the negative electrode layer.

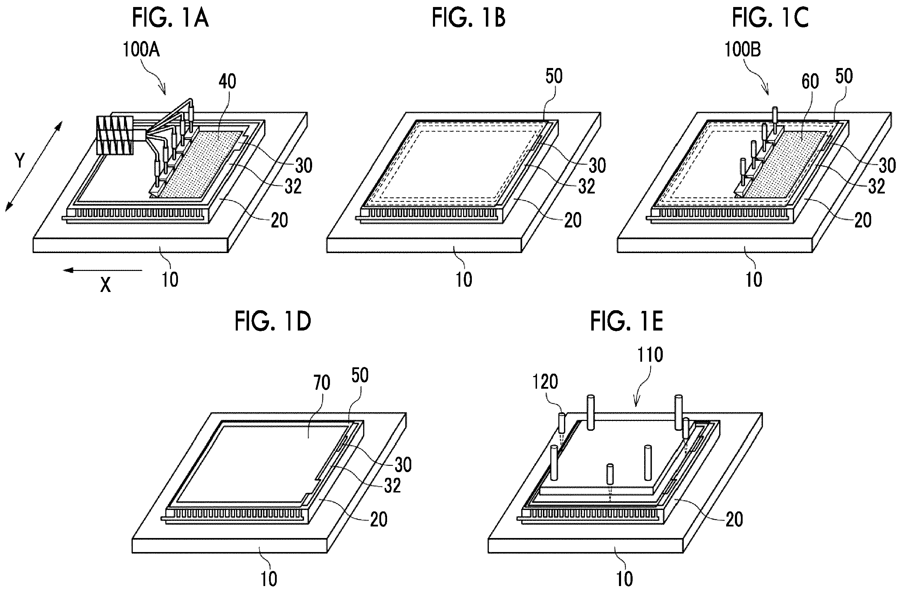

The manufacturing method of a battery according to the present disclosure will be described with reference to Figs. 1A to 1E. Here, Figs. 1A to 1E are schematic process diagrams showing an example of the manufacturing method of a battery according to the present disclosure.

As shown in Fig. 1A, first, a first collector foil 30 to which a resin film 32 is attached is adsorbed on an adsorption mechanism 20 placed on a stage 10. In this case, the resin film 32 is in contact with the adsorption mechanism 20.

Next, as shown in Fig. 1A, a first electrode layer 40 is formed on the first collector foil 30 using an electrode layer forming device 100A (step A). In this case, the electrode layer forming device 100A intermittently or continuously supplies an electrode material onto the first collector foil 30, and regulates a thickness of the supplied electrode material to form the first electrode layer 40.

Subsequently, a separator 50 is placed on the obtained first electrode layer 40 as shown in Fig. 1B.

Next, as shown in Fig. 1C, a second electrode layer 60 is formed on the separator 50 using an electrode layer forming device 100B (step B).

Thereafter, a second collector foil 70 is placed on the obtained second electrode layer 60 as shown in Fig. 1D (step C). The second collector foil 70 is provided with a resin film (not shown), and the resin film is positioned on the outermost surface. That is, at this stage, a laminate consisting of resin film/first collector foil/first electrode layer/separator/second electrode layer/second collector foil/resin film is obtained.

Next, as shown in Fig. 1E, the laminate is pressed using a pressing member 110 from above the resin film, and the resin films of outer peripheral portions of the first electrode layer and the second electrode layer are thermally welded using a heat sealer 120.

By going through the steps, a battery including the first collector foil, the first electrode layer, the separator, the second electrode layer, and the second collector foil in this order is obtained.

### [Step A]

In the step A, the first electrode layer is formed on the first collector foil using the first electrode material.

In the present step, a positive electrode layer as the first electrode layer may be formed on a positive electrode collector foil as the first collector foil, as in the above-described aspect 1-1 and an aspect 2-1; or a negative electrode layer as the first electrode layer may be formed on a negative electrode current collector as the first current collector, as in the above-described aspect 1-2 and an aspect 2-2.

A method of forming the first electrode layer on the first collector foil is not particularly limited, and a method capable of forming the first electrode layer on the first collector foil in a desired thickness and in a continuous layer is adopted.

As the method of forming the first electrode layer on the first collector foil, a method using the electrode layer forming device 100A shown in Fig. 1A will be described. The electrode layer forming device 100A intermittently or continuously supplies the first electrode material onto the first collector foil 30, and regulates a thickness of the supplied first electrode material to form the first electrode layer 40. Therefore, the electrode layer forming device 100A has an electrode material supply unit which supplies the first electrode material onto the first collector foil, and a regulating member.

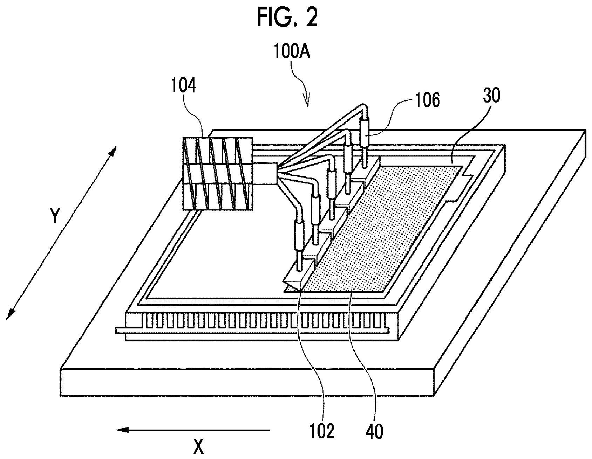

Hereinafter, the method of forming the first electrode layer will be described in more detail with reference to Fig. 2. Fig. 2 is a schematic view showing an example of the method of forming an electrode layer.

As shown in Fig. 2, the electrode layer forming device 100A has five regulating members 102 arranged in an arrow Y direction. Each of the regulating members 102 is provided with an opening portion toward the first collector foil 30, and the first electrode material is supplied to the collector foil 30 from the opening portion. In this case, the first electrode material is supplied on the first collector foil 30 with an adjusted supply amount through the opening portion with one main screw 104 and a branch screw 106 provided for each of the five regulating members 102.

In addition, the regulating member 102 is installed such that a distal end thereof maintains a constant distance from a surface of the first collector foil 30. It is preferable that the regulating member 102 is configured to maintain the constant distance even in a state in which the regulating member 102 is in contact with the first electrode material and even in a state in which the regulating member 102 is transported and moved in an arrow X direction. That is, it is preferable that the regulating member 102 applies a pressure to the first electrode material in contact with the first collector foil 30 such that the constant distance is maintained from the surface of the first collector foil 30 and the pressure is directed to oppose a repulsive force (that is, a force which pushes back the regulating member 102) from the first electrode material.

In a case where the first electrode material is supplied between the collector foil 30 and the regulating member 102 and the regulating member 102 is transported and moved in the arrow X direction, the electrode material passes through a gap between the regulating member 102 and the surface of the first collector foil 30. In a case where the first electrode material passes through the gap, the thickness of the first electrode material is regulated by the contact with the regulating member 102, and the first electrode material is further applied onto the surface of the first collector foil 30, whereby the first electrode layer 40 formed of the first electrode material is formed on the first collector foil 30.

It is preferable that a contact portion of the regulating member 102 with the first electrode material vibrates. In a case where the contact portion of the regulating member 102 with the first electrode material vibrates, the vibration propagates to the first electrode material and a shearing force is applied, so that the viscosity of the first electrode material may decrease and the fluidity may improve. As a result, the first electrode layer as a continuous layer is easily formed on the collector foil 30 without applying a large pressure to the first electrode material, and the surface of the formed first electrode layer is also smoothed.

In such a method of forming the first electrode layer, it is preferable to adjust the supply amount of the first electrode material onto the first collector foil 30 using, for example, the main screw 104 and the branch screw 106 described above so that the first electrode layer 40 which matches the size of the first collector foil 30 is formed.

In addition, a screen printing method may be adopted to the formation of the first electrode layer on the first collector foil.

For example, a screen mesh is disposed in advance on the first collector foil, and the first electrode material is applied from above to the first collector foil. Thereafter, the screen mesh is removed, and the first electrode material supplied to the first collector foil is leveled with the regulating member, whereby it is possible to form the first electrode layer having excellent thickness uniformity.

As described above, in the present step of intermittently or continuously supplying the first electrode material onto the first collector foil and regulating a thickness of the supplied first electrode material to form the first electrode layer, in a case where a mass of the first electrode material supplied onto the first collector foil is denoted by G_{D1} [g] and a mass of the formed first electrode layer is denoted by G_{L1} [g], it is preferable that G_{L1} ≤ G_{D1} ≤ G_{L1} × 1.2 is satisfied, and it is more preferable that G_{L1} ≤ G_{D1} ≤ G_{L1} × 1.1 is satisfied.

In a case where G_{L1} ≤ G_{D1} ≤ G_{L1} × 1.2 is satisfied, excessive supply of the first electrode material onto the first collector foil is suppressed, and thus the first electrode layer corresponding to the size of the first collector foil can be accurately formed.

The first collector foil, the first electrode material, and the supply unit for the first electrode material onto the first current collector foil, the regulating member, and the like, which are used in the present step, will be described later.

As described above, in the present step, the first electrode layer formed of the first electrode material containing an electrode active material, a conductive auxiliary agent, and an electrolytic solution is formed on the first collector foil.

### [Step B]

In the step B, the second electrode layer is formed on the separator using the second electrode material.

In the present step, a negative electrode layer as the second electrode layer may be formed on the separator which has been placed on the positive electrode layer as the first electrode layer formed in the step A, as in the above-described aspect 1-1; a positive electrode layer as the second electrode layer may be formed on the separator which has been placed on the negative electrode layer as the first electrode layer formed in the step A, as in the aspect 1-2. That is, in the case of the aspect 1-1 and the aspect 1-2, the present step (step B) is performed after the step A.

In addition, in the present step, the negative electrode layer as the second electrode layer may be formed on the separator which is not yet placed on the positive electrode layer, as in the above-described aspect 2-1; or the positive electrode layer as the second electrode layer may be formed on the separator which is not yet placed on the negative electrode layer, as in the aspect 2-2. That is, in the case of the aspect 2-1 and the aspect 2-2, the present step (step B) is not limited to being performed after the step A.

A method of forming the second electrode layer on the separator is not particularly limited, and a method capable of forming the second electrode layer on the separator in a desired thickness and in a continuous layer is adopted.

In particular, in the case of the aspect 1-1 and the aspect 1-2, since the first electrode layer is present in the lower layer of the separator, in the present step, it is desirable that a pressure applied to the separator and the electrode material in the case of forming the first electrode layer is low.

In addition, in the case of the aspect 2-1 and the aspect 2-2, it is desirable that the formation of the second electrode layer on the separator is performed in a device (for example, another stage) different from the device in which the step A is performed.

As a method of forming the electrode layer on the separator, as shown in Fig. 1C, a method of using the electrode layer forming device 100B in the same manner as in the step A is preferable.

As the method of forming the electrode layer on the separator using the electrode layer forming device 100B, the same method as the method of forming the electrode layer on the collector foil in the step A is adopted, and the preferred aspect thereof is also the same.

In addition, as in the aspect 1-1 and aspect 1-2 described above, for example, a sheet feeder can be used as the method of placing the separator on the first electrode layer.

As described above, in the present step of intermittently or continuously supplying the second electrode material onto the separator and regulating a thickness of the supplied second electrode material to form the second electrode layer, in a case where a mass of the second electrode material supplied onto the separator is denoted by G_{D2} [g] and a mass of the formed second electrode layer is denoted by G_{L2} [g], it is preferable that G_{L2} ≤ G_{D2} ≤ G_{L2} × 1.2 is satisfied, and it is more preferable that G_{L2} ≤ G_{D2} ≤ G_{L2} × 1.1 is satisfied.

In a case where G_{L2} ≤ G_{D2} ≤ G_{L2} × 1.2 is satisfied, excessive supply of the electrode material onto the separator is suppressed, and thus the electrode layer corresponding to the size of the separator can be accurately formed.

The separator and the like used in the present step will be described later.

### [Step C]

In the step C, the second collector foil is placed on the second electrode layer.

In the present step, a negative electrode collector foil as the second collector foil may be placed on the negative electrode layer as the second electrode layer, as in the above-described aspect 1-1 and an aspect 2-1; or a positive electrode collector foil as the second current collector may be placed on the positive electrode layer as the second electrode layer, as in the above-described aspect 1-2 and an aspect 2-2.

In the aspect 2-1, it is preferable that the present step is performed after a step D1 described later is performed. That is, it is preferable that, in the step D1, the separator is placed on the positive electrode layer formed in the step A together with the negative electrode layer formed on the separator in the step B, and then the negative electrode collector foil is placed on the negative electrode layer.

In addition, in the aspect 2-2, it is preferable that the present step is performed after a step D2 described later is performed. That is, it is preferable that, in the step D2, the separator is placed on the negative electrode layer formed in the step A together with the positive electrode layer formed on the separator in the step B, and then the positive electrode collector foil is placed on the positive electrode layer.

### [Steps D1 and D2]

In the case of the aspect 2-1, it is preferable that the manufacturing method further includes a step D1 of placing the separator on the positive electrode layer as the first electrode layer, formed in the step A, together with the negative electrode layer as the second electrode layer,formed on the separator in the step B.

In the case of the aspect 2-2, it is preferable that the manufacturing method further includes a step D2 of placing the separator on the negative electrode layer as the first electrode layer, formed in the step A, together with the positive electrode layer as the second electrode layer,formed on the separator in the step B.

Examples of a method of moving the separator together with the second electrode layer formed on the separator include a method of gripping and lifting an end part of the separator (that is, an unformed part of the electrode layer) to move the separator, and a method of inserting a fork for transfer under the separator and lifting the fork to move the separator.

In addition, the steps D1 and D2 can also be performed by transporting the first collector foil on which the first electrode layer obtained in the step A is formed, with a belt conveyor, and placing the separator on which the second electrode layer is formed, which has been lifted in advance, on the first electrode layer on the transported first collector foil, downstream of the belt conveyor.

A unit for moving the separator on which the second electrode layer is formed is not particularly limited, but is preferably a unit capable of aligning the formed second electrode layer on the first electrode layer without breaking the formed second electrode layer. As a specific unit, a unit which adsorbs the end part of the separator, a unit which grips the end part of the separator, a unit which lifts the separator, such as the fork for transferring from below, and the like can be used.

In the manufacturing method of a battery according to the present disclosure, in order to improve productivity, the device for performing the step A, the device for performing the step B, the device for performing the step C, and the device for performing the step D1 or D2 may be arranged in the order of steps; and the devices may be connected by a transport unit so that these steps are continuously performed.

For example, in the aspect 1-1 and the aspect 1-2, the first electrode layer is formed on the first collector foil while transporting the first collector foil by a transporting unit such as a belt conveyor, the separator is placed on the formed first electrode layer, the second electrode layer is formed on the separator placed on the first electrode layer, and the second collector foil is placed on the formed second electrode layer, whereby the electrode can be manufactured with high productivity.

### [Preferred aspect]

In the manufacturing method of a battery according to the present disclosure, it is preferable to select the aspect 1-1 among the aspect 1-1 and the aspect 1-2.

This is due to the fact that the electrode material for obtaining the positive electrode layer having a desired concentration of solid components tends to have higher viscosity and be harder than the electrode material for obtaining the negative electrode layer having the same concentration of solid components. It is difficult to form an electrode layer having excellent thickness uniformity with an electrode material having a high viscosity and a hard texture. However, even in a case where the electrode material for obtaining a positive electrode layer having high viscosity and a hard texture is used, since a large pressure can be applied to the electrode material without considering the influence on the underlayer, as in a case of forming the second electrode layer, in a case of forming the positive electrode layer as the first electrode layer, it is possible to form the first electrode layer (that is, the positive electrode layer) having excellent in-plane thickness uniformity. As a result, the first electrode layer (that is, the positive electrode layer) obtained by applying a large pressure is also excellent in formability, and can also suppress the collapse.

In the case of the aspect 1-1, after the formation of the positive electrode layer, the separator is placed on the formed positive electrode layer, and then the negative electrode layer is formed on the separator. The separator can hold or allow passage of the electrolytic solution due to its structure. Therefore, for example, a concentration of liquid components (mainly, the electrolytic solution) of the electrode material for forming the positive electrode layer can be increased by the retention amount or the passing amount of the separator. As a result, the concentration of solid components of the electrode material for forming the positive electrode layer can be reduced, and thus the effect of easily forming the positive electrode layer having excellent in-plane thickness uniformity is also obtained in the step A.

As described above, since the electrolytic solution can be moved through the separator, homogenization (averaging) of the electrolytic solution may be carried out between the formed positive electrode layer and negative electrode layer.

From this point, it is preferable to select the aspect 1-1 among the aspect 1-1 and the aspect 1-2.

The fact that the concentration of liquid components (mainly, the electrolytic solution) of the electrode material for forming the positive electrode layer can be increased by the retention amount or the passing amount of the separator can also be adopted to the aspect 1-2. That is, in the aspect 1-2, the concentration of liquid components (mainly, the electrolytic solution) of the electrode material for forming the negative electrode layer, which is used in the step A, may be increased by the retention amount or the passing amount of the separator.

In addition, in the manufacturing method of a battery according to the present disclosure, by selecting the aspect 2-1 and the aspect 2-2, the uniformity of the electrode layer in thickness can be increased.

This is because, in the case of the aspect 2-1 and the aspect 2-2, the electrode layer is not present in the lower layer of the separator forming the electrode layer.

In the case of the aspect 1-1 and the aspect 1-2, the separator is placed on the electrode layer, and the electrode layer is formed on the separator. Therefore, in a case where the second electrode layer is formed on the separator, the pressure applied to the electrode material may affect the thickness of the first electrode layer which is the lower layer. On the other hand, in the case of the aspect 2-1 and the aspect 2-2, in a case where the second electrode layer is formed on the separator, since there is no electrode layer in the lower layer of the separator, the pressure applied to the electrode material does not affect the thickness of the first electrode layer which is the lower layer, and an electrode layer having excellent thickness uniformity is obtained.

### [Other steps]

The manufacturing method of a battery according to the present disclosure may include other steps.

Examples of the other steps include a step (hereinafter, also referred to as a step E) of pressurizing the second collector foil toward the second electrode layer side after the step C, and a step (hereinafter, also referred to as a step F) of thermally welding the resin films to each other in a case where the collector foil with a resin film is used as the collector foil.

### (Step E)

In the step E, after the second collector foil is placed on the second electrode layer in the step C, the second collector foil is pressurized toward the second electrode layer side.

Examples of a pressurizing unit used in the present step include a blade, a pressurization roller, and a press machine. In addition, during the pressurization, vibration may be applied. That is, in a case where the second collector foil is pressurized toward the second electrode layer side by the pressurizing unit, the pressurizing unit may vibrate.

In the present step, a pressure in a case of pressurizing the second collector foil toward the second electrode layer side is preferably 0.01 MPa to 100 MPa, more preferably 0.1 MPa to 50 MPa, and particularly preferably 0.2 MPa to 10 MPa.

In the present step, it is preferable that the pressurizing unit is moved relative to the electrode layer.

In addition, in the present step, the laminate may be pressurized stepwise using a plurality of pressurizing units.

In the present step, for example, the second collector foil and the second electrode layer, which has been heated at 30°C to 100°C, may be pressurized.

### (Step F)

In the step F, in a case where the collector foil with a resin film is used as the collector foil, the resin films of the outer peripheral portions of the first electrode layer and the second electrode layer in the laminate consisting of resin film/first collector foil/first electrode layer/separator/second electrode layer/second collector foil/resin film are thermally welded.

Specifically, as shown in Fig. 1E, the outer peripheral portions of the first electrode layer and the second electrode layer are heated to, for example, a temperature higher than a glass transition temperature (Tg) of the resin film using the heat sealer 120, and thus the resin films are thermally welded to each other.

A method of thermally welding the resin films to each other is not limited to the heat sealer, and any unit capable of heating a desired region of the resin films to a desired temperature (for example, a temperature higher than the glass transition temperature (Tg) of the resin film) may be used. As the method of thermally welding the resin films to each other, for example, in addition to a hot plate frame, a method of thermally welding while scanning, such as an infrared (IR) heater and a carbon dioxide (CO₂) laser, can also be used.

Hereinafter, the collector foil, the electrode material, the separator, and the like, which are used in the manufacturing method of a battery according to the present disclosure, will be described in detail.

In addition, details of the unit used for forming the electrode layer will also be described.

### [Collector foil]

The collector foil is not particularly limited, and known collector foils (a positive electrode collector foil and a negative electrode collector foil) can be used.

Examples of the positive electrode collector foil include foils (that is, metal layers) of aluminum, an aluminum alloy, stainless steel, nickel, and titanium. The positive electrode collector foil is preferably aluminum or an aluminum alloy. The positive electrode collector foil may be aluminum having, on a surface thereof, a coating layer containing one or more of carbon, nickel, titanium, silver, gold, platinum, and vanadium oxide.

Examples of the negative electrode collector foil include foils (that is, metal layers) of aluminum, copper, a copper alloy, stainless steel, nickel, and titanium. The negative electrode collector foil is preferably aluminum, copper, a copper alloy, or stainless steel, and more preferably copper or a copper alloy. The negative electrode collector foil may be copper or stainless steel, having, on a surface thereof, a coating layer containing one or more of carbon, nickel, titanium, silver, and lithium.

The collector foil is preferably an aluminum foil (including an aluminum foil having the above-described coating layer on the surface thereof) or a copper foil (including a copper foil having the above-described coating layer on the surface thereof). The aluminum foil is generally used as a positive electrode collector foil. The copper foil is generally used as a negative electrode collector foil.

In addition, as described above, a resin film may be attached to the collector foil.

Examples of the resin film include a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

From the viewpoint of transportability and the like, a thickness of the collector foil (including the case of the laminate) is preferably 3 µm or more, more preferably 5 µm or more, and particularly preferably 10 µm or more.

From the viewpoint of flexibility and lightness, the thickness of the collector foil is preferably 100 µm or less, more preferably 70 µm or less, and particularly preferably 50 µm or less.

The thickness of the collector foil is an arithmetic average value of thicknesses at three points measured by cross-sectional observation. In the cross-sectional observation, a known microscope (for example, a scanning electron microscope) can be used.

### [Electrode material]

The electrode material contains an electrode active material, a conductive auxiliary agent, and an electrolytic solution, and has a concentration of solid components of 30% by volume to 80% by volume.

The electrode material may contain an additive as necessary, in addition to the above-described three components.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the electrode layer can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

In the manufacturing method of an electrode layer according to the present disclosure, the amount of the positive electrode active material used is determined such that the content in the electrode layer is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin).

Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material is preferably 30% by volume to 60% by volume, more preferably 35% by volume to 57% by volume, and still more preferably 45% by volume to 55% by volume.

In the manufacturing method of an electrode layer according to the present disclosure, the amount of the negative electrode active material used is determined such that the content in the electrode layer is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Conductive auxiliary agent)

From the viewpoint of improving electron conductivity of the electrode active material, the electrode layer contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

In the manufacturing method of an electrode layer according to the present disclosure, the amount of the conductive auxiliary agent used is determined such that the content in the electrode layer is within the above-described range.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, and may be 50% by volume or less or 40% by volume or less. The lower limit of the content of the electrolytic solution with respect to the total volume of the electrode material is not limited, and may be 20% by volume or more or 30% by volume or more.

The content of the electrolytic solution with respect to the total volume of the electrode material is, for example, preferably 30% by volume to 50% by volume.

### (Solvent)

The electrode layer may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The solvent may be used alone or in combination of two or more kinds thereof.

A content of the liquid components (that is, the electrolytic solution and the solvent) with respect to the total volume of the electrode material is preferably 70% by volume or less, and may be 50% by volume or less or 40% by volume or less. The lower limit of the content of the liquid components with respect to the total volume of the electrode material is not limited, and may be 20% by volume or more or 30% by volume or more.

The content of the liquid components with respect to the total volume of the electrode material is preferably 30% by volume to 50% by volume.

The liquid component contained in the electrode layer, that is, the component in the electrode layer, which is in a liquid state at 25°C, is preferably in a liquid state even at -10°C and preferably in a liquid state even at -20°C. That is, the component in the electrode layer, which is in a liquid state at 25°C, is preferably a component which does not solidify at -10°C and preferably a component which does not solidify at -20°C.

### (Other components)

The electrode layer may contain a binder, a dispersant, and other additives in addition to the above-described components. From the viewpoint of improving energy density, it is preferable that a content of the binder (also referred to as a resin component) in the electrode layer is low, and it is preferably 1% by mass or less and particularly preferably 0% by mass.

The binder refers to a component known in the electrode layer of the related art, a rheology modifier, and a dispersant; and examples thereof include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### [Separator]

As the separator, a known separator adopted to a semi-solid state battery can be used.

Specific examples of the separator include a porous membrane containing a resin material such as polyethylene, polypropylene, polybutene, polyvinyl chloride, polyethylene terephthalate, polyether sulfone, polyamide, polyimide, polyimide amide, polyamide, polycycloolefin, nylon, and polytetrafluoroethylene.

A thickness of the separator is not particularly limited, and can be 0.5 µm to 40 µm.

### [Regulating member]

Preferred examples of the regulating member include a blade and a roller.

As described above, the blade and the roller as the molding member may vibrate in a case of coming into contact with the electrode material, and the electrode material can be vibrated by using the vibrating molding member.

### (Blade)

The blade is a member having a plate-like shape, but the shape, size, material, and the like of a contact portion which comes into contact with the electrode material may be appropriately determined depending on physical properties of the electrode material (the kind of the electrode active material, the concentration of solid components, the composition (viscosity, surface tension, and the like) of the electrolytic solution, and the like), the size and thickness of the electrode layer to be formed, and the like.

In addition, it is preferable that the contact portion of the blade with the electrode material is less likely to cause the electrode material to adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

### (Roller)

The roller is a member in which an outer peripheral surface is rotatable, but the shape, size, material, and the like of the roller may be appropriately determined depending on the physical properties of the electrode material (the kind of the electrode active material, the concentration of solid components, the composition (viscosity, surface tension, and the like) of the electrolytic solution, and the like), the size and thickness of the electrode layer to be formed, and the like.

The material constituting the outer peripheral surface of the roller may be the same as that of the blade, and may have a surface layer exhibiting releasability.

An outer diameter of the roller is not particularly limited, but may be, for example, 20 mm to 30 mm.

In addition, since the roller rotates, a friction coefficient between the outer peripheral surface of the roller and the electrode material can be considered to be 0. However, as a result, since adhesiveness with the electrode material may be increased, it is preferable that a film is interposed between the electrode material and the outer peripheral surface of the roller.

### [Electrode material supply unit]

As a supply unit for the electrode material onto the collector foil or the separator, a disk feeder, a vibration feeder, or the like can be used, in addition to the screw feeder described above.

In addition, in a case where the electrode material is applied onto the collector foil or the separator, a regulating frame can also be used from the viewpoint of uniformizing the application of the electrode material.

### Examples

Hereinafter, the present disclosure will be described in detail with reference to Examples, but the present disclosure is not limited thereto.

Each step in each example described later was performed in a dry room (low-dew point room) at 22°C.

### [Preparation of positive electrode material (P1)]

(1) 13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith; 64 g of the obtained 115.7 g of the mixed solution was taken out, and used as an electrolytic solution X1.
(2) 2 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 revolutions per minute (rpm) for 30 seconds with a mixer (AWATORI RENTARO ARE-310, manufactured by THINKY Corporation; the same applies hereinafter) to prepare a kneaded material Y1 (176 g).
(3) The electrolytic solution X1 (64 g) was added to the kneaded material Y1 (176 g), and the mixture was stirred at 1,500 rpm for 120 seconds with a mixer (AWATORI RENTARO ARE-310) to obtain a positive electrode material (P1).

The obtained positive electrode material (P1) was a Bingham plastic fluid having a yield value of 45 kPa, and a volume ratio of the solid components and the liquid components was 48:52.

### [Preparation of positive electrode material (P2)]

(1) From 115.7 g of the mixed solution obtained in (1) of the positive electrode material (P1), 43 g of the mixed solution was taken out, and used as an electrolytic solution X2.
(2) 2 g of a conductive auxiliary agent (Ketjen black: "CARBON ECP600JD" manufactured by LION SPECIALTY CHEMICALS CO., LTD.) and 195 g of a positive electrode active material (iron phosphate: "LFP NCO M121" manufactured by Aleees) were stirred at 1,500 rpm for 30 seconds with a mixer (AWATORI RENTARO ARE-310) to prepare a kneaded material Y2 (197 g).
(3) The electrolytic solution X2 (43 g) was added to the kneaded material Y2 (197 g), and the mixture was stirred at 1,500 rpm for 120 seconds with a mixer (AWATORI RENTARO ARE-310) to obtain a positive electrode material (P2).

The obtained positive electrode material (P2) was a Bingham plastic fluid having a yield value of 200 kPa, and a volume ratio of the solid components and the liquid components was 60:40.

### [Preparation of negative electrode material (P3)]

(1) An electrolytic solution X1 (64 g) which was the same as that used for the positive electrode material (P1) was prepared.
(2) 159 g was weighed as a total amount of a conductive auxiliary agent (carbon black; "C-NERGY SUPER C45" manufactured by Imerys Graphite & Carbon) and a negative electrode active material ("MESOPHASE GRAPHITE POWDER A (MGP-A)" manufactured by China Steel Chemical Corporation) in which a mass ratio thereof was 2.7:63.4, and both were stirred at 900 rpm for 18 seconds with a mixer (AWATORI RENTARO ARE-310) to prepare a kneaded material Z1.
(3) The electrolytic solution X1 (64 g) was added to the kneaded material Z1 (159 g), and the mixture was stirred at 900 rpm for 30 seconds with a mixer (AWATORI RENTARO ARE-310) to obtain a negative electrode material (P3).

The obtained negative electrode material (P3) was a Bingham plastic fluid having a yield value of 20 kPa, and a volume ratio of the solid components and the liquid components was 52:48.

### [Preparation of negative electrode material (P4)]

(1) From 115.7 g of the mixed solution obtained in (1) of the positive electrode material (P1), 50 g of the mixed solution was taken out, and used as an electrolytic solution X3.
(2) 190 g was weighed as a total amount of a conductive auxiliary agent (carbon black; "C-NERGY SUPER C45" manufactured by Imerys Graphite & Carbon) and a negative electrode active material ("MESOPHASE GRAPHITE POWDER A (MGP-A)" manufactured by China Steel Chemical Corporation) in which a mass ratio thereof was 2.7:63.4, and both were stirred at 900 rpm for 18 seconds with a mixer (AWATORI RENTARO ARE-310) to prepare a kneaded material Z2.
(3) The electrolytic solution X3 (50 g) was added to the kneaded material Z2 (190 g), and the mixture was stirred at 900 rpm for 30 seconds with a mixer (AWATORI RENTARO ARE-310) to obtain a negative electrode material (P4).

The obtained negative electrode material (P4) was a Bingham plastic fluid having a yield value of 150 kPa, and a volume ratio of the solid components and the liquid components was 68:32.

### [Preparation of collector foils (S1) and (S2)]

Collector foil (S1): PET film including a thermal fusion layer which contained an ethylene-vinyl acetate copolymer (EVA) was bonded, by thermal fusion, to a back surface of a positive electrode collector foil (an aluminum foil, an average thickness: 20 µm, Ra: 0.5 µm, EAA-218D, a carbon-coated product manufactured by Korea JCC)

Collector foil (S2): PET film including a thermal fusion layer which contained an ethylene-vinyl acetate copolymer was bonded, by thermal fusion, to a back surface of a negative electrode collector foil (copper foil, average thickness: 10 µm, Ra: 0.55 µm, manufactured by Nippon Denkai,Ltd.)

The Ra of the collector described above refers to an arithmetic average roughness Ra on a surface on which the electrode material film is formed.

### [Preparation of separator]

A polyethylene separator having a thickness of 20 µm (manufactured by Senior, void volume: 47%) was prepared.

### [Preparation of blade (B1)]

Blade (B1): blade made of stainless steel

### <Example 1>

A battery was produced in the manner of the aspect 1-1 as follows.

A positive electrode layer formed of the positive electrode material (P1) was formed on the aluminum foil of the collector foil (S1) using the electrode layer forming device 100A as shown in Fig. 1A (step A). In this case, G_{L1} = G_{D1}. The formed positive electrode layer had a size of 540 mm × 500 mm, a thickness of 330 µm, and a concentration of solid components of 48% by volume.

Subsequently, the polyethylene separator was placed on the positive electrode layer.

Next, a negative electrode layer formed of the negative electrode material (P3) was formed on the separator using the electrode layer forming device 100B as shown in Fig. 1C (step B). In this case, G_{L2} = G_{D2}. The formed negative electrode layer had a size of 542 mm × 502 mm, a thickness of 345 µm, and a concentration of solid components of 52% by volume.

Thereafter, the copper foil of the collector foil (S2) was placed on the negative electrode layer so as to be in contact with the copper foil (step C).

The obtained laminate consisting of PET film/aluminum foil/positive electrode layer (lower layer)/separator/negative electrode layer (upper layer)/copper foil/PET film was pressed as shown in Fig. 1E, and the outer peripheral portions of the electrode layers were thermally welded with the heat sealer.

In this manner, a battery was obtained.

### <Example 2>

A battery was produced in the manner of the aspect 1-2 as follows.

A negative electrode layer formed of the negative electrode material (P3) was formed on the copper foil of the collector foil (S2) using the electrode layer forming device 100A as shown in Fig. 1A (step A). In this case, G_{L1} = G_{D1}. The formed negative electrode layer had a size of 542 mm × 502 mm, a thickness of 345 µm, and a concentration of solid components of 52% by volume.

Subsequently, the polyethylene separator was placed on the negative electrode layer.

Next, a positive electrode layer formed of the positive electrode material (P1) was formed on the separator using the electrode layer forming device 100B as shown in Fig. 1C (step B). In this case, G_{L2} = G_{D2}. The formed positive electrode layer had a size of 540 mm × 500 mm, a thickness of 330 µm, and a concentration of solid components of 48% by volume.

Thereafter, the aluminum foil of the collector foil (S1) was placed on the positive electrode layer so as to be in contact with the aluminum foil (step C).

The obtained laminate consisting of PET film/copper foil/negative electrode layer (lower layer)/separator/positive electrode layer (upper layer)/aluminum foil/PET film was pressed as shown in Fig. 1E, and the electrode layers were thermally welded with the heat sealer.

In this manner, a battery was obtained.

### <Example 3>

A battery was produced in the manner of the aspect 2-1 as follows.

A positive electrode layer formed of the positive electrode material (P1) was formed on the aluminum foil of the collector foil (S1) using the electrode layer forming device 100A as shown in Fig. 1A (step A). In this case, G_{L1} = G_{D1}. The formed positive electrode layer had a size of 540 mm × 500 mm, a thickness of 330 µm, and a concentration of solid components of 48% by volume.

In addition, a stage having an adsorption mechanism as shown in Figs. 1A to 1E was prepared, and the separator was placed on the adsorption mechanism of the stage. Next, a negative electrode layer formed of the negative electrode material (P3) was formed on the separator using the same electrode layer forming device 100B as shown in Fig. 1C (step B). In this case, G_{L2} = G_{D2}. The formed negative electrode layer had a size of 542 mm × 502 mm, a thickness of 345 µm, and a concentration of solid components of 52% by volume.

The separator on which the negative electrode layer had been formed was removed from the stage, and placed on the positive electrode layer (step D1).

Thereafter, the copper foil of the collector foil (S2) was placed on the negative electrode layer so as to be in contact with the copper foil (step C).

The obtained laminate consisting of PET film/aluminum foil/positive electrode layer (lower layer)/separator/negative electrode layer (upper layer)/copper foil/PET film was pressed as shown in Fig. 1E, and the electrode layers were thermally welded with the heat sealer.

In this manner, a battery was obtained.

### <Example 4>

A battery was produced in the manner of the aspect 2-2 as follows.

A negative electrode layer formed of the negative electrode material (P3) was formed on the copper foil of the collector foil (S2) using the electrode layer forming device 100A as shown in Fig. 1A (step A). In this case, G_{L1} = G_{D1}. The formed negative electrode layer had a size of 542 mm × 502 mm, a thickness of 345 µm, and a concentration of solid components of 52% by volume.

In addition, a stage having an adsorption mechanism as shown in Figs. 1A to 1E was prepared, and the separator was placed on the adsorption mechanism of the stage. Next, a positive electrode layer formed of the positive electrode material (P1) was formed on the separator using the same electrode layer forming device 100B as shown in Fig. 1C (step B). In this case, G_{L2} = G_{D2}. The formed positive electrode layer had a size of 540 mm × 500 mm, a thickness of 330 µm, and a concentration of solid components of 48% by volume.

The separator on which the positive electrode layer had been formed was removed from the stage, and placed on the negative electrode layer (step D2).

Thereafter, the aluminum foil of the collector foil (S1) was placed on the positive electrode layer so as to be in contact with the aluminum foil (step C).

The obtained laminate consisting of PET film/copper foil/negative electrode layer (lower layer)/separator/positive electrode layer (upper layer)/aluminum foil/PET film was pressed as shown in Fig. 1E, and the electrode layers were thermally welded with the heat sealer.

In this manner, a battery was obtained.

### <Comparative Example 1>

In the same manner as in Example 1, a positive electrode layer formed of the positive electrode material (P1) was formed on the aluminum foil of the collector foil (S1) using the electrode layer forming device 100A as shown in Fig. 1A.

In addition, in the same manner as in Example 2, a negative electrode layer formed of the negative electrode material (P3) was formed on the copper foil of the collector foil (S2) using the electrode layer forming device 100A as shown in Fig. 1A.

After the separator was placed on the positive electrode layer, the negative electrode layer formed on the collector foil (S2) was inverted such that the negative electrode layer was placed on the separator.

In a case where the collector foil (S2) was inverted, a part of the negative electrode layer collapsed from the copper foil of the collector foil (S2), and thus a laminate consisting of PET film/aluminum foil/positive electrode layer (lower layer)/separator/negative electrode layer (upper layer)/copper foil/PET film was not obtained.

### <Examples 5 to 8>

Batteries were produced in the same manner as in Examples 1 to 4, except that, as shown in Table 1 below, the positive electrode material (P1) was replaced with the positive electrode material (P2) and the negative electrode material (P3) was replaced with the negative electrode material (P4).

### <Example 9>

A battery was produced in the same manner as in Example 1, except that the positive electrode material (P1) was replaced with the positive electrode material (P2).

### <Example 10>

A battery was produced in the same manner as in Example 2, except that the negative electrode material (P3) was replaced with the positive electrode material (P4).

### <Example 11>

A battery was produced in the same manner as in Example 3, except that the positive electrode material (P1) was replaced with the positive electrode material (P2).

### <Example 12>

A battery was produced in the same manner as in Example 4, except that the negative electrode material (P3) was replaced with the positive electrode material (P4).

### [Evaluation of collapse]

Collapse of the electrode layer formed in the step B (that is, the negative electrode layer having a size of 542 mm × 502 mm or the positive electrode layer having a size of 540 mm × 500 mm, which was the upper layer) was observed from the upper side of the electrode layer using a CCD camera and illumination, and the evaluation was performed.

Since the electrode layer of the portion covered with the collector foil could not be observed to collapse, the collapse of the electrode layer, which was the upper layer, could be observed by observing the electrode material protruding to the periphery of the collector foil (the periphery of the electrode layer).

In the observation itself, 728 images of the entire surface (entire upper surface) of the electrode layer were captured in a visual field of 20 mm square.

By the above-described method, the captured images (728 images) of the entire surface of the electrode were acquired, and the number of captured images in which the collapse was observed was counted. The proportion of the number of captured images in which collapse was observed to the total number of captured images (728 images) was determined, and formability was evaluated according to the following standard. The results are shown in Table 1.

### -Evaluation standard-

AA: proportion of the number of captured images in which the collapse was observed was 1% or less.
A: proportion of the number of captured images in which the collapse was observed was more than 1% and 3% or less.
B: proportion of the number of captured images in which the collapse was observed was more than 3% and 5% or less.
C: proportion of the number of captured images in which the collapse was observed was more than 5% and 10% or less.
D: proportion of the number of captured images in which the collapse was observed was more than 10%.

### [Evaluation of in-plane thickness uniformity]

A thickness of the obtained electrode layer was measured as follows, and in-plane thickness uniformity was evaluated.

The total thickness TA1 of the collector foil and the electrode layer as the lower layer, which were placed on the stage, was measured using a multi-color laser coaxial displacement meter manufactured by KEYENCE CORPORATION. Measurement points were obtained by dividing the laminate into six equal parts in the width direction (Y direction in Figs. 1A to 1E) and setting the center portion of each of the six equal parts to 500 mm along the longitudinal direction (X direction in Figs. 1A to 1E). In addition, a thickness TA2 of only the collector foil was measured in advance by the same device and at the same measurement points as described above; and the thickness of the electrode layer as the lower layer was determined by subtracting the measured value TA2 of only the collector foil from the measured value of the total thickness TA1 of the collector foil and the electrode layer, obtained by the above-described methods.

In addition, in the case of the aspects 1-1 and 1-2, the total thickness TB1 of the electrode layer as the upper layer and the layer below the electrode layer (the collector foil, the electrode layer as the lower layer, and the separator) was measured by the device and at the measurement points described above. In addition, before forming the electrode layer as the upper layer, a thickness TB2 of the collector foil, the electrode layer as the lower layer, and the separator was measured by the same device and at the same measurement points as described above; and the thickness of the electrode layer as the upper layer was determined by subtracting the measured value of the thickness TB2 from the measured value of the total thickness TB 1, obtained by the above-described methods.

In addition, in the case of the aspects 2-1 and 2-2, the total thickness TC1 of the separator and the electrode layer as the upper layer, which were placed on the stage, was measured by the device and at the measurement points described above. In addition, before forming the electrode layer as the upper layer, a thickness TC2 of only the separator was measured by the same device and at the same measurement points as described above; and the thickness of the electrode layer as the upper layer was determined by subtracting the measured value of the thickness TC2 from the measured value of the total thickness TC1, obtained by the above-described methods.

Based on the obtained measured values, a rate of change in thickness of the laminate was determined as follows. In the rate of change in thickness, the larger difference from an average value X_{Ave} was selected from the maximum value X_{Max} and the minimum value X_{Min} obtained from the measured values, and the rate of change in thickness was calculated by Expression 1. Rate of change in thickness (%) = |Maximum value XMax or minimum value XMin - Average value XAve| ÷ Average value XAve × 100

Here, in Expression 1, the maximum value X_{Max} is the maximum value in the measured values; the minimum value X_{Min} is the minimum value in the measured values; and the average value X_{Ave} is an arithmetic average value of the measured values.

Based on the obtained value of the rate of change in thickness, in-plane thickness uniformity was evaluated according to the following standard.

### -Standard-

AA: value of the rate of change in thickness was 2% or less.
A: value of the rate of change in thickness was more than 2% and 3% or less.
B: value of the rate of change in thickness was more than 3% and 4% or less.
C: value of the rate of change in thickness was more than 4% and 5% or less.
D: value of the rate of change in thickness was more than 5%.

**[Table 1]**

| | Aspect | Positive electrode collector foil | Positive electrode layer | | | | Separator | Negative electrode layer | | | | Negative electrode collector foil | Collapse |
|---|---|---|---|---|---|---|---|---|---|---|---|---|---|
| | | | Electrode material | Concentration of solid components of electrode material [% by volume] | Thickness [µm] | In-plane thickness uniformity | | Electrode material | Concentration of solid components of electrode material [% by volume] | Thickness [µm] | In-plane thickness uniformity | | |
| Comparative Example 1 | | (S1) | (P1) | 48 | 330 | A | PE, 20 µm | (P3) | 52 | 345 | AA | (S2) | - |
| Example 1 | 1-1 | (S1) | (P1) | 48 | 330 | A | PE, 20 µm | (P3) | 52 | 345 | AA | (S2) | A |
| Example 2 | 1-2 | (S1) | (P1) | 48 | 330 | A | PE, 20 µm | (P3) | 52 | 345 | AA | (S2) | B |
| Example 3 | 2-1 | (S1) | (P1) | 48 | 330 | A | PE, 20 µm | (P3) | 52 | 345 | AA | (S2) | AA |
| Example 4 | 2-2 | (S1) | (P1) | 48 | 330 | A | PE, 20 µm | (P3) | 52 | 345 | AA | (S2) | AA |
| Example 5 | 1-1 | (S1) | (P2) | 60 | 200 | C | PE, 20 µm | (P4) | 68 | 200 | B | (S2) | C |
| Example 6 | 1-2 | (S1) | (P2) | 60 | 200 | C | PE, 20 µm | (P4) | 68 | 200 | B | (S2) | C |
| Example 7 | 2-1 | (S1) | (P2) | 60 | 200 | C | PE, 20 µm | (P4) | 68 | 200 | B | (S2) | A |
| Example 8 | 2-2 | (S1) | (P2) | 60 | 200 | C | PE, 20 µm | (P4) | 68 | 200 | B | (S2) | A |
| Example 9 | 1-1 | (S1) | (P2) | 60 | 250 | C | PE, 20 µm | (P3) | 52 | 270 | AA | (S2) | AA |
| Example 10 | 1-2 | (S1) | (P1) | 48 | 250 | A | PE, 20 µm | (P4) | 68 | 270 | B | (S2) | A |
| Example 11 | 2-1 | (S1) | (P2) | 60 | 250 | C | PE, 20 µm | (P3) | 52 | 270 | AA | (S2) | A |
| Example 12 | 2-2 | (S1) | (P1) | 48 | 250 | A | PE, 20 µm | (P4) | 68 | 270 | B | (S2) | A |

As shown in Table 1, in the manufacturing methods of a battery of Examples, the collapse of the electrode layer was not observed.

### (Explanation of References)

10: stage
20: adsorption mechanism
30: first collector foil
32: resin film
40: first electrode layer
50: separator
60: second electrode layer
70: second collector foil (with resin film not shown)
100A, 100B: electrode layer forming device
102: regulating member
104: main screw
106: branch screw
110: pressing member
120: heat sealer
X: movement direction of electrode layer forming device
Y: direction in which regulating members are arranged

The disclosure of JP2022-183461 filed on November 16, 2022 is incorporated in the present specification by reference.

All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a battery including a first collector foil, a first electrode layer, a separator, a second electrode layer, and a second collector foil in this order, the manufacturing method comprising:
a step A of forming the first electrode layer on the first collector foil using a first electrode material;
a step B of forming the second electrode layer on the separator using a second electrode material; and
a step C of placing the second collector foil on the second electrode layer,
wherein both of the first electrode material and the second electrode material contain an electrode active material, a conductive auxiliary agent, and an electrolytic solution, and have a concentration of solid components of 30% by volume to 80% by volume.

2. The manufacturing method of a battery according to claim 1,
wherein the step A is a step of forming a positive electrode layer as the first electrode layer on a positive electrode collector foil as the first collector foil,
the step B is a step of forming a negative electrode layer as the second electrode layer on the separator which has been placed on the positive electrode layer, and
the step C is a step of placing a negative electrode collector foil as the second collector foil on the negative electrode layer.

3. The manufacturing method of a battery according to claim 1,
wherein the step A is a step of forming a negative electrode layer as the first electrode layer on a negative electrode collector foil as the first collector foil,
the step B is a step of forming a positive electrode layer as the second electrode layer on the separator which has been placed on the negative electrode layer, and
the step C is a step of placing a positive electrode collector foil as the second collector foil on the positive electrode layer.

4. The manufacturing method of a battery according to claim 1,
wherein the step A is a step of forming a positive electrode layer as the first electrode layer on a positive electrode collector foil as the first collector foil,
the step B is a step of forming a negative electrode layer as the second electrode layer on the separator,
the step C is a step of placing a negative electrode collector foil as the second collector foil on the negative electrode layer, and
the manufacturing method further includes a step D1 of placing the separator on the positive electrode layer together with the negative electrode layer formed on the separator.

5. The manufacturing method of a battery according to claim 1,
wherein the step A is a step of forming a negative electrode layer as the first electrode layer on a negative electrode collector foil as the first collector foil,
the step B is a step of forming a positive electrode layer as the second electrode layer on the separator,
the step C is a step of placing a positive electrode collector foil as the second collector foil on the positive electrode layer, and
the manufacturing method further includes a step D2 of placing the separator on the negative electrode layer together with the positive electrode layer formed on the separator.

6. The manufacturing method of a battery according to claim 1,
wherein the step A is a step of intermittently or continuously supplying the first electrode material onto the first collector foil and regulating a thickness of the supplied first electrode material to form the first electrode layer, and
in a case where a mass of the first electrode material supplied onto the first collector foil is denoted by G_{D1} [g] and a mass of the formed first electrode layer is denoted by G_{L1} [g], G_{L1} ≤ G_{D1} ≤ G_{L1} × 1.2 is satisfied.

7. The manufacturing method of a battery according to claim 1,
wherein the step B is a step of intermittently or continuously supplying the second electrode material onto the separator and regulating a thickness of the supplied second electrode material to form the second electrode layer, and
in a case where a mass of the second electrode material supplied onto the separator is denoted by G_{D2} [g] and a mass of the formed second electrode layer is denoted by G_{L2} [g], G_{L2} ≤ G_{D2} ≤ G_{L2} × 1.2 is satisfied.
